# FASCICULE DE BREVET EUROPEEN

(11) **EP 2 942 772 B1**
(45) Date de publication et mention de la délivrance du brevet: **09.11.2016**
(21) Numéro de dépôt: 15166324.2
(22) Date de dépôt: 05.05.2015
(51) Int. Cl.: G09F 13/18, F21V 8/00

(54) **DISPOSITIF D'AFFICHAGE D'ÉLÉMENTS DE SIGNALISATION**
ANZEIGEVORRICHTUNG VON SIGNALISIERUNGSELEMENTEN
DEVICE FOR DISPLAYING SIGNALLING ELEMENTS

(30) Priorité: 05.05.2014 FR 1454048
(43) Date de publication de la demande: 11.11.2015
(73) Titulaire: Cooper Technologies Company, Houston, TX 77002 (US)
(72) Inventeur: Lacour, Frédéric, 63670 La Roche Blanche (FR)
(74) Mandataire: Gendron, Vincent Christian

(56) Documents cités:
- EP-A1- 2 548 746
- EP-A2- 2 650 865
- WO-A1-2013/062426
- DE-U1-202005 005 862
- DE-U1-202009 011 554
- US-A- 5 546 687
- US-A1- 2007 035 945
- US-A1- 2012 227 296

## Description

La présente invention concerne un dispositif d'affichage d'élément de signalisation comprenant un support transparent doté d'un logement adapté à recevoir au moins un élément de signalisation, typiquement une feuille sérigraphiée avec pictogramme, et un module d'éclairage dudit élément de signalisation par une tranche dudit support.

EP2548746 présente un dispositif d'affichage selon les caractéristiques du préambule de la revendication 1.

De tels dispositifs d'affichage sont couramment utilisés dans les établissements recevant du public, aussi bien pour assurer, via des pictogrammes, le balisage des issues d'un tel établissement et/ou celui des services qui y sont proposés, que pour constituer un éclairage de sécurité.

Les dispositifs d'affichage connus comportent des éléments de signalisation fixes intégrés ou montés sur un support. L'installateur choisit ainsi les éléments de signalisation qu'il souhaite afficher sur le support et adapte le dispositif d'affichage pour afficher les différentes informations, notamment pour indiquer différentes directions. Cependant, une fois que les éléments de signalisation sont montés sur le support du dispositif d'affichage, ceux-ci sont fixes et inamovibles. L'information affichée par le dispositif d'affichage est alors figée.

De plus, de tels dispositifs étant installés dans des lieux recevant du public, un soin tout particulier doit être apporté à l'esthétique du produit, que ce soit en termes d'encombrement ou d'impact visuel et, actuellement, les dispositifs d'affichage de haute gamme susceptibles de répondre à ces attentes sont complexes à réaliser et donc onéreux.

L'invention vise à pallier ces inconvénients en fournissant un dispositif d'affichage d'élément de signalisation dont l'information affichée est aisément configurable, et dont la fabrication est aisée avec des coûts de fabrication abaissés, tout en présentant un aspect haute gamme.

A cet effet, le dispositif d'affichage d'éléments de signalisation de l'invention, par ailleurs conforme à la définition générique qu'en donne le préambule ci-dessus, est essentiellement caractérisé en ce que ledit support transparent est constitué d'un cadre de forme globalement rectangulaire entourant une zone de forme complémentaire audit élément de signalisation constituant ledit logement, ledit cadre comprenant une bordure périphérique longitudinale inférieure présentant une section en V adaptée au positionnement et au maintien dans ledit logement dudit élément de signalisation, et une bordure périphérique longitudinale supérieure présentant des moyens de maintien dudit élément de signalisation agencés par clipsage sur ladite bordure périphérique longitudinale supérieure, adaptés à retenir ledit élément de signalisation dans ledit logement, ladite bordure périphérique longitudinale supérieure comportant deux crans de clipsage positionnés à distance l'un de l'autre adaptés à coopérer avec deux crochets de clipsage complémentaires, lesdits crochets de clipsage complémentaires étant conçus pour retenir ledit élément de signalisation dans ledit logement lorsqu'ils sont montés par clipsage sur lesdits crans de clipsage de ladite bordure périphérique longitudinale supérieure.

On appelle ici clipsage, un système de fixation dans lequel un relief vient élastiquement s'emboîter dans ou derrière un autre, assurant ainsi la fixation par simple encliquetage anti-retour d'une pièce sur l'autre. Ce type de fixation est particulièrement pratique entre deux pièces moulées.

Grâce à cet agencement dans lequel les moyens de maintien clipsables sont escamotables élastiquement, il est particulièrement aisé de libérer les éléments et, en particulier, l'élément de signalisation, montés et maintenus dans le logement délimité par le cadre, lesquels éléments peuvent alors aisément pivoter vers l'avant hors du logement en étant avantageusement guidés pour ce faire par la section en V de la bordure périphérique longitudinale inférieure, d'où ils peuvent être aisément retirés pour être changés le cas échéant. Il est alors possible d'utiliser le même dispositif d'affichage pour indiquer différentes informations et, en particulier, pour l'affichage de plusieurs directions possibles grâce au caractère aisément configurable des éléments de signalisation montés amovibles. L'utilisation des dispositifs d'affichage selon l'invention est ainsi plus flexible, puisque l'on peut configurer à loisir les informations affichées avec un même dispositif, en particulier si l'agencement des lieux est modifié après installation du dispositif d'affichage.

Lesdits crochets de clipsage présentent un profil en U renversé dont les extrémités des ailes du U renversé forment des parties d'épaulement en saillie de ladite bordure périphérique longitudinale supérieure sur lesquelles vient s'appuyer ledit élément de signalisation monté dans ledit logement pour son maintien.

De préférence, lesdits deux crans de clipsage sont disposés sensiblement dans l'alignement respectivement des bords internes des bordures périphériques transversales dudit cadre. Les moyens de maintien agencés par clipsage peuvent ainsi être positionnés sensiblement dans le prolongement des bordures latérales du cadre et sont ainsi avantageusement rendus moins visibles.

Avantageusement, ledit module d'éclairage comprend une pluralité de diodes électroluminescentes montées alignées sur un circuit imprimé allongé fixé sur un bord interne de ladite bordure périphérique longitudinale supérieure en regard dudit logement, lesdits crochets de clipsage complémentaires étant adaptés pour faire passer une connexion électrique vers des bornes de connexion dudit circuit imprimé.

Avantageusement, lesdits crochets de clipsage complémentaires comprennent un passage pratiqué dans la base du U renversé, prévu pour être disposé dans l'axe d'un taraudage pratiqué dans les crans de clipsage correspondants et débouchant dans ledit bord interne en regard d'une borne de connexion correspondante dudit circuit imprimé.

Avantageusement, ledit passage et ledit taraudage alignés sont adaptés à recevoir une broche de connexion apte à être reliée à une borne de connexion correspondante dudit circuit imprimé lorsque lesdits crochets de clipsage sont montés par clipsage sur lesdits crans de clipsage.

Avantageusement, ledit module d'éclairage comprend une plaque-guide de lumière présentant un bord supérieur formant une surface latérale de couplage avec ladite pluralité de diodes électroluminescentes depuis laquelle la lumière est émise latéralement dans ladite plaque-guide de lumière, ladite plaque-guide de lumière présentant un bord inférieur positionné le long de ladite section en V et étant maintenue en contact plan avec ledit élément de signalisation dans ledit logement par l'intermédiaire desdits moyens de maintien.

Avantageusement, ladite surface latérale de couplage de la plaque-guide de lumière coopère avec des plots d'indexation agencés sur ledit bord interne de ladite bordure périphérique longitudinale supérieure pour le positionnement de ladite plaque-guide de lumière dans ledit logement.

De préférence, ledit élément de signalisation est recouvert d'un couvercle transparent monté et retenu dans ledit logement par l'intermédiaire de ladite section en V et desdits moyens de maintien, de sorte qu'une face frontale dudit couvercle vienne affleurer un plan de façade dudit cadre.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en perspective éclatée du dispositif d'affichage conforme à l'invention ;
- la figure 2 est une vue de détail du cadre constituant le support du dispositif d'affichage conforme à l'invention.

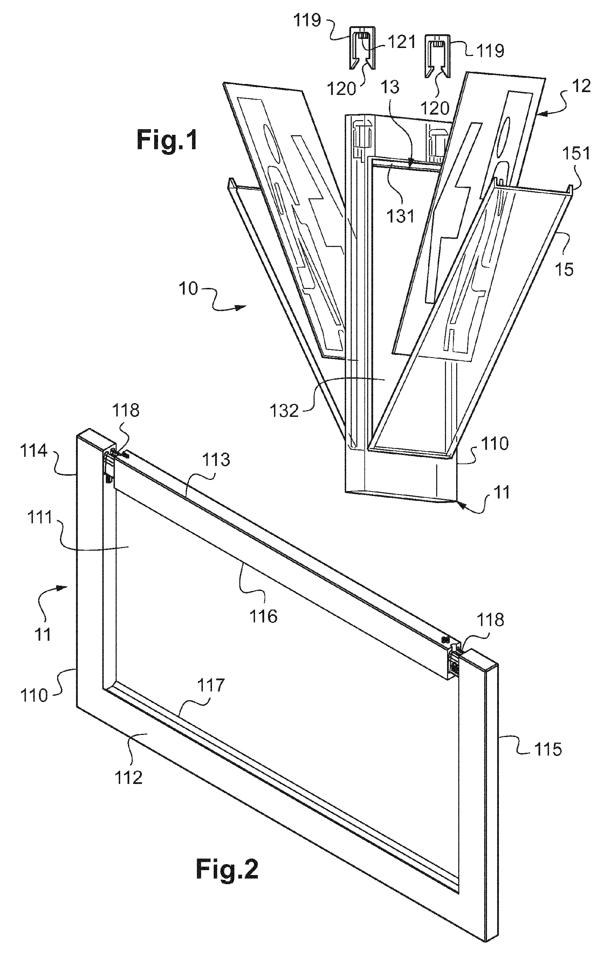

Dans la description ci-dessous, les expressions du type « horizontal », « vertical », « supérieur », « inférieur », s'entendent dans la position du dispositif d'affichage d'élément de signalisation tel qu'il est représenté sur les figures 1 ou 2.

Le dispositif d'affichage 10 selon l'invention comprend globalement un support 11 dans lequel est monté un élément de signalisation 12, sous la forme par exemple d'une feuille signalétique sérigraphiée affichant un pictogramme de sécurité, qui représente par exemple un personnage passant une porte et/ou une flèche directionnelle, dans des couleurs de sécurité prédéterminées, typiquement verte et blanche. En particulier, un tel pictogramme doit satisfaire à des exigences définissant les caractéristiques d'affichage pour les indications de signalisation d'urgence, telles que définies notamment dans les normes ISO 7010:2011, ISO 3864-3:2012, ISO 3864-4 :2011 et EN 1838:2013.

Un tel dispositif d'affichage peut être avantageusement utilisé pour constituer un bloc de sécurité permettant via des pictogrammes de signaler une issue de secours ou une sortie quelconque.

Le dispositif d'affichage comprend également un module d'éclairage 13 de l'élément de signalisation 12, qui, pour la mise en évidence du pictogramme, procure un éclairage par la tranche du support 11.

Conformément à l'invention, le support 11 est plus particulièrement réalisé sous la forme d'un cadre 110 de forme globalement rectangulaire, de faible épaisseur par rapport à ses autres dimensions, entourant une zone vide 111 de forme complémentaire à l'élément de signalisation 12, qui constitue un logement de forme globalement sensiblement complémentaire à celle de l'élément de signalisation et apte à recevoir notamment l'élément de signalisation 12, comme il sera décrit plus en détail par la suite.

Le cadre 110 est réalisé préférentiellement par moulage d'une matière plastique telle que du polymétacrylate de méthyl (en abrégé PMMA, de l'anglais Polymethyl Methacrylate) ou du polycarbonate. Ces matières plastiques sont avantageusement transparentes ou pratiquement transparentes à la lumière.

Comme illustré plus en détail à la figure 2, le cadre 110 comprend une bordure périphérique longitudinale inférieure 112 et une bordure périphérique longitudinale supérieure 113, ainsi que deux bordures périphériques transversales 114, 115 entourant le logement 111 apte à recevoir l'élément de signalisation 12. La bordure longitudinale supérieure 113 est délimitée du côté du logement 111 par une surface interne plane 116, qui constitue un bord interne de la bordure longitudinale supérieure 113 situé en regard du logement 111.

Dans cette configuration du cadre 110, le module d'éclairage 13 comporte plus particulièrement un circuit imprimé allongé 131, disposé suivant le bord interne 116 de la bordure longitudinale supérieure 113 du cadre 110, et sur lequel est montée alignée une pluralité de diodes électroluminescentes (non représentées). Le circuit imprimé allongé 131 est par exemple fixé par collage le long du bord interne116 de la bordure longitudinale supérieure 113 du cadre 110.

Le module d'éclairage 13 comprend encore une plaque-guide de lumière 132 destinée à être montée dans le logement 111. La plaque-guide de lumière 132 se présente sous la forme d'une plaque réalisée préférentiellement en matière plastique telle que du PMMA, de forme globalement sensiblement complémentaire à celle de l'élément de signalisation 12 et de faible épaisseur par rapport à ses autres dimensions. La plaque-guide de lumière 132 présente un bord supérieur destinée à venir en regard du bord interne 116 de la bordure longitudinale supérieure 113 du cadre 110 lors de son montage dans la zone évidée 111, et qui constitue une surface de couplage optique avec les diodes électroluminescentes, depuis laquelle la lumière est émise latéralement dans la plaque-guide de lumière 132. La plaque-guide de lumière 135 comprend une première surface de diffusion de la lumière sur laquelle est destinée à être superposé l'élément de signalisation 12, préférentiellement par l'intermédiaire d'un film mince diffusant, non représenté, par exemple d'une épaisseur de l'ordre de la centaine de microns et réalisé en polycarbonate ou PET (polyéthylène téréphtalate), et destiné à être intercalé entre la plaque-guide de lumière 132 et l'élément de signalisation 12 lors du montage de l'ensemble dans le logement 111 afin d'homogénéiser la lumière émise. La plaque-guide de lumière 135 comprend aussi une seconde surface opposée à la première surface et sur laquelle est formé un réseau de microlentilles pour diriger la lumière conduite dans la plaque-guide de lumière 132 vers le film diffusant et l'élément de signalisation 12. Ces microlentilles, par exemple sphériques, forment ainsi une couche d'extraction de la plaque-guide de lumière 132 permettant d'améliorer l'extraction de lumière vers le film diffusant et l'élément de signalisation 12. Un film réfléchissant, non représenté, est en outre monté en étant superposé à cette seconde surface de la plaque-guide de lumière 132 dans le logement 111.

Conformément à l'invention, pour assurer le montage de manière amovible des différents éléments dans le logement 111, la bordure périphérique longitudinale inférieure 112 du cadre 110 est conformée de sorte à présenter une section en V 117, dirigée vers le logement 111. Cette section en V 117 présente une zone centrale plane entre les deux ailes du V le long de laquelle est destiné à venir se positionner le bord inférieur de la plaque-guide de lumière lors de son montage dans le logement 111, le bord supérieur de la plaque-guide de lumière étant amené en couplage optique avec les diodes électroluminescentes et coopérant de préférence avec des plots d'indexation agencés sur le bord interne 116 de la bordure périphérique longitudinale supérieure 113 pour le positionnement et le maintien de ladite plaque-guide de lumière dans le logement 111. Par ailleurs, on vient monter l'élément de signalisation 12, muni éventuellement d'un couvercle transparent 15 en matière plastique de faible épaisseur, dans le logement 111, grâce à la section en V 117 de la bordure périphérique longitudinale inférieure 112 du cadre 110. Ainsi, lors du montage, une bordure périphérique inférieure du couvercle transparent 15 est prévue pour venir prendre appui sur une aile du V de la section en V 117 de la bordure périphérique longitudinale inférieure 112 du cadre 110.

Bien entendu, comme illustré schématiquement à la figure 1, ce montage peut être réalisé indifféremment d'un côté ou l'autre du cadre 110 selon la configuration d'orientation souhaitée pour l'information affichée. Il conviendra simplement de monter la plaque-guide 132 de lumière dans le logement 111 en orientant la surface de diffusion de la plaque-guide de lumière du côté de l'élément de signalisation.

Le montage se poursuit en plaquant l'élément de signalisation 12 et le couvercle transparent 15 contre la plaque-guide de lumière 132 dans le logement 111, tandis que des moyens de maintien 118, 119 agencés par clipsage sur la bordure périphérique longitudinale supérieure 113 du cadre 110, sont prévus pour retenir l'ensemble des éléments montés dans le logement 111. Pour ce faire, deux crans de clipsage 118 sont ménagées dans la bordure périphérique longitudinale supérieure 113 en étant positionnés à distance l'un de l'autre et préférentiellement agencés sensiblement dans l'alignement respectivement des bords internes des deux bordures périphériques transversales 114 et 115 du cadre 110. Ces crans de clipsage 118 sont adaptés pour coopérer avec deux crochets de clipsage complémentaires 119, réalisés préférentiellement par moulage d'une matière plastique transparente telle que du PMMA, qui, lorsqu'ils viennent à être montés par clipsage sur les crans de clipsage 118 de la bordure périphérique longitudinale supérieure 113 du cadre 110, permettent de retenir les éléments montés dans le logement 111. Plus précisément, ces crochets de clipsage 119 présentent un profil en U renversé dont les extrémités des ailes du U renversé forment des parties d'épaulement 120 en saillie de la bordure périphérique longitudinale supérieure 113 du cadre 110, sur lesquelles vient s'appuyer l'élément de signalisation 12 préférentiellement par l'intermédiaire de zones d'appui complémentaires 151 formées en bordure périphérique supérieure du couvercle transparent 15 venant en regard des parties d'épaulement 120 en saillie lors du montage.

La présence des moyens de maintien est ainsi rendue avantageusement quasiment imperceptible, du fait de leur agencement dans l'alignement respectivement des bords internes des deux bordures périphériques transversales 114 et 115 du cadre 110 et de leur constitution en matière plastique transparente.

Le montage amovible de l'élément de signalisation 12 conformément à l'invention est alors terminé, l'élément de signalisation 12 est alors pincé entre la plaque-guide de lumière 132 et la face arrière du couvercle transparent 15, dont la face frontale est montée affleurant au plan de façade du cadre 110. L'élément de signalisation 12 s'étend alors dans un plan sensiblement confondu avec le plan de façade du cadre 110 du dispositif d'affichage 10.

En outre, les crochets de clipsage 119 peuvent être utilisés pour passer une connexion électrique vers des bornes de connexion (non représentées) du circuit imprimé 131. Pour ce faire, les crochets de clipsage 119 comprennent un passage 121 pratiqué dans la base du U renversé, qui est prévu pour être disposé dans l'axe d'un taraudage (non représenté) pratiqué dans les crans de clipsage 118 correspondants et qui débouche dans le bord interne 116 de la bordure périphérique longitudinale supérieure 113 du cadre 110 en regard d'une borne de connexion correspondante du circuit imprimé 131. Ce passage 120 et le taraudage alignés sont alors adaptés à recevoir une broche de connexion (non représentée) apte à être reliée à une borne de connexion correspondante du circuit imprimé lorsque les crochets de clipsage 119 sont montés par clipsage sur les crans de clipsage 120.

## Revendications

1. Dispositif d'affichage d'éléments de signalisation comprenant un support (11) transparent doté d'un logement (111) adapté à recevoir au moins un élément de signalisation (12), et un module d'éclairage (13) dudit élément de signalisation (12) par une tranche dudit support (11), ledit support (11) étant constitué d'un cadre (110) de forme globalement rectangulaire entourant une zone de forme complémentaire audit élément de signalisation (12) constituant ledit logement (111), **caractérisé en ce que** ledit cadre comprend une bordure périphérique longitudinale inférieure (112) présentant une section en V (117) présentant une zone centrale plane entre les deux ailes du V adaptée au positionnement et au maintien dans ledit logement (111) dudit élément de signalisation (12), et une bordure périphérique longitudinale supérieure (113) présentant des moyens de maintien (118, 119) dudit élément de signalisation (12) agencés par clipsage sur ladite bordure périphérique longitudinale supérieure (113), adaptés à retenir ledit élément de signalisation (12) dans ledit logement (111), ladite bordure périphérique longitudinale supérieure (113) comportant deux crans de clipsage (118) positionnés à distance l'un de l'autre adaptés à coopérer avec deux crochets de clipsage complémentaires (119), lesdits crochets de clipsage complémentaires (119) étant conçus pour retenir ledit élément de signalisation (12) dans ledit logement (111) lorsqu'ils sont montés par clipsage sur lesdits crans de clipsage (118) de ladite bordure périphérique longitudinale supérieure (113), lesdits crochets de clipsage complémentaire (119) présentant un profil en U renversé dont les extrémités des ailes du U renversé forment des parties d'épaulement (120) en saillie de ladite bordure périphérique longitudinale supérieure (113) sur lesquelles vient s'appuyer ledit élément de signalisation (12) monté dans ledit logement pour son maintien.

2. Dispositif selon la revendication 1, **caractérisé en ce que** lesdits deux crans de clipsage (118) sont disposés sensiblement dans l'alignement respectivement des bords internes des bordures périphériques transversales (114, 115) dudit cadre (110).

3. Dispositif selon la revendication 1 ou 2, **caractérisé en ce que** ledit module d'éclairage (13) comprend une pluralité de diodes électroluminescentes montées alignées sur un circuit imprimé allongé (131) fixé sur un bord interne (116) de ladite bordure périphérique longitudinale supérieure (113) en regard dudit logement (111), lesdits crochets de clipsage complémentaires (119) étant adaptés pour faire passer une connexion électrique vers des bornes de connexion dudit circuit imprimé (131).

4. Dispositif selon l'une quelconque des revendications précédentes, **caractérisé en ce que** lesdits crochets de clipsage complémentaires (119) comprennent un passage (121) pratiqué dans la base du U renversé, prévu pour être disposé dans l'axe d'un taraudage pratiqué dans les crans de clipsage (118) correspondants et débouchant dans ledit bord interne (116) en regard d'une borne de connexion correspondante dudit circuit imprimé (131).

5. Dispositif selon la revendication 4, **caractérisé en ce que** ledit passage (119) et ledit taraudage alignés sont adaptés à recevoir une broche de connexion apte à être reliée à une borne de connexion correspondante dudit circuit imprimé (131) lorsque lesdits crochets de clipsage (119) sont montés par clipsage sur lesdits crans de clipsage (118).

6. Dispositif selon l'une quelconque des revendications 3 à 5, **caractérisé en ce que** ledit module d'éclairage (13) comprend une plaque-guide de lumière (132) présentant un bord supérieur formant une surface latérale de couplage avec ladite pluralité de diodes électroluminescentes depuis laquelle la lumière est émise latéralement dans ladite plaque-guide de lumière, ladite plaque-guide de lumière présentant un bord inférieur positionné le long de ladite section en V (117) et étant maintenue en contact plan avec ledit élément de signalisation (12) dans ledit logement par l'intermédiaire desdits moyens de maintien (118, 119).

7. Dispositif selon la revendication 6, **caractérisé en ce que** ladite surface latérale de couplage de la plaque-guide de lumière (132) coopère avec des plots d'indexation agencés sur ledit bord interne (116) de ladite bordure périphérique longitudinale supérieure (113) pour le positionnement de ladite plaque-guide de lumière dans ledit logement.

8. Dispositif selon l'une quelconque des revendications précédentes, **caractérisé en ce que** ledit élément de signalisation (12) est recouvert d'un couvercle transparent (15) monté et retenu dans ledit logement (111) par l'intermédiaire de ladite section en V (117) et desdits moyens de maintien (118, 119), de sorte qu'une face frontale dudit couvercle vienne affleurer un plan de façade dudit cadre.

## Patentansprüche

1. Anzeigevorrichtung von Signalisierungselementen, umfassend einen durchsichtigen Träger (11), der mit einer Aufnahme (111) versehen ist, die angepasst ist, über einen Teil des Trägers (11) mindestens ein Signalisierungselement (12) und eine Beleuchtungsbaugruppe (13) des Signalisierungselements (12) aufzunehmen,
wobei der Träger (11) gebildet wird durch einen im Wesentlichen rechteckigen Rahmen (110), der einen Bereich mit einer Form umschließt, die zum Signalisierungselement (12) komplementär ist und die Aufnahme (111) bildet, **dadurch gekennzeichnet, dass** der Rahmen einen unteren längs verlaufenden Umfangsrand (112) umfasst, der einen V-Abschnitt (117) aufweist, der einen zentralen ebenen Bereich zwischen den beiden Schenkeln des Vs aufweist, angepasst, an die Positionierung und das Halten des Signalisierungselements (12) in der Aufnahme (111), und einen oberen längs verlaufenden Umfangsrand (113), der Haltemittel (118, 119) des Signalisierungselements (12) aufweist, die durch Einrasten an dem oberen längs verlaufenden Umfangsrand (113) angeordnet sind, und angepasst sind, das Signalisierungselement (12) in der Aufnahme (111) zu halten, wobei der obere längs verlaufende Umfangsrand (113) zwei Einrastkerben (118) umfasst, die voneinander beabstandet positioniert sind und angepasst sind, mit zwei komplementären Einrasthaken (119) zusammenzuwirken, wobei die komplementären Einrasthaken (119) ausgestaltet sind, das Signalisierungselement (12) in der Aufnahme (111) zu halten, wenn sie durch Einrasten an den Einrastkerben (118) des oberen längs verlaufenden Umfangsrands (113) angebracht sind, wobei die komplementären Einrasthaken (119) ein umgekehrtes U-Profil aufweisen, wobei die Enden der Schenkel des umgekehrten Us von dem oberen längs verlaufenden Umfangsrand (113) überstehende Ansatzpartien (120) bilden, an die das Signalisierungselement (12) sich stützt, wenn es zum Halten in der Aufnahme angebracht ist.

2. Vorrichtung nach Anspruch 1, **dadurch gekennzeichnet, dass** die zwei Einrastklemmen (118) im Wesentlichen auf der jeweiligen Linie der Innenkanten der quer verlaufenden Umfangsränder (114, 115) des Rahmens (110) angeordnet sind.

3. Vorrichtung nach Anspruch 1 oder 2, **dadurch gekennzeichnet, dass** die Beleuchtungsbaugruppe (13) eine Vielzahl elektrolumineszenter Dioden umfasst, die auf einer Linie an einer länglichen Leiterplatte (131) angebracht sind, wobei die Leiterplatte (131) an einer der Aufnahme (111) zugewandten Innenkante (116) des oberen längs verlaufenden Umfangsrands (113) befestigt ist, wobei die komplementären Einrasthaken (119) angepasst sind, eine elektrische Verbindung an Anschlussklemmen der Leiterplatte (131) herzustellen.

4. Vorrichtung nach einem der vorhergehenden Ansprüche, **dadurch gekennzeichnet, dass** die komplementären Einrasthaken (119) eine Öffnung (121) umfassen, die in der Basis des umgekehrten Us realisiert ist, wobei die Öffnung (121) vorgesehen ist, in der Achse eines Innengewindes, das in den zugehörigen Einrastkerben (118) ausgeführt ist, angeordnet zu sein, und in die Innenkante (116) mündet, die einer der Leiterplatte (131) zugehörigen Anschlussklemme zugewandt ist.

5. Vorrichtung nach Anspruch 4, **dadurch gekennzeichnet, dass** die Öffnung (119) und das Gewinde, die ausgerichtet sind, angepasst sind, einen Steckerstift aufzunehmen, der geeignet ist, mit einer der Leiterplatte (131) zugehörigen Anschlussklemme verbunden zu werden, wenn die Einrasthaken (119) durch Einrasten an den Einrastkerben (118) angebracht sind.

6. Vorrichtung nach einem der Ansprüche 3 - 5, **dadurch gekennzeichnet, dass** die Beleuchtungsbaugruppe (13) eine Lichtleiterplatte (132) umfasst, die eine obere Kante aufweist, die eine Seitenfläche bildet zur Kopplung mit der Vielzahl elektrolumineszenter Dioden, aus der das Licht zur Seite in die Lichtleiterplatte ausgegeben wird, wobei die Lichtleiterplatte eine untere Kante aufweist, die entlang des V-Abschnitts (117) positioniert ist und in der Aufnahme anhand der Haltemittel (118, 119) in flächigem Kontakt mit dem Signalisierungselement (12) gehalten wird.

7. Vorrichtung nach Anspruch 6, **dadurch gekennzeichnet, dass** die Seitenfläche zur Kopplung der Lichtleiterplatte (132) zum Positionieren der Lichtleiterplatte in der Aufnahme mit Kopplungsstiften, die an der Innenkante (116) des oberen längs verlaufenden Umfangsrands (113) angeordnet sind, zusammenwirkt.

8. Vorrichtung nach einem der vorhergehenden Ansprüche, **dadurch gekennzeichnet, dass** das Signalisierungselement (12) mit einem durchsichtigen Deckel (15) überdeckt ist, der in der Aufnahme (111) durch den V-Abschnitt (117) und die Haltemittel (118, 119) so angebracht und gehalten ist, dass eine Vorderfläche des Deckels eine Ebene der Vorderseite des Rahmens zum Vorschein kommen lässt.

## Claims

1. Device for displaying signage, comprising a transparent holder (11) provided with a recess (111) which is suitable for receiving at least one sign (12), and a module (13) for illuminating said sign (12) by an edge surface of said holder (11), said holder (11) consisting of a frame (110) which has a generally rectangular shape and surrounds a region having a shape that is complementary to said sign (12) and forming said recess (111), **characterised in that** said frame comprises a lower longitudinal peripheral border (112) which has a V-shaped cross section (117) having a flat central region between the two legs of the V that is suitable for being positioned and held in said recess (111) of said sign (12), and an upper longitudinal peripheral border (113) having means (118, 119) which are intended for holding said sign (12), are arranged on said upper longitudinal peripheral border (113) by snap-fitting and are suitable for keeping said sign (12) in said recess (111), said upper longitudinal peripheral border (113) comprising two snap-fitting notches (118) which are positioned at a distance from one another and are suitable for engaging with two complementary snap-fitting hooks (119), said complementary snap-fitting hooks (119) being designed to keep said sign (12) in said recess (111) when said hooks are mounted by snap-fitting on said snap-fitting notches (118) of said upper longitudinal peripheral border (113), said complementary snap-fitting hooks (119) having an upside-down U-shaped profile, of which the ends of the legs of the U form shoulder parts (120) which protrude from said upper longitudinal peripheral border (113) and against which said sign (12) mounted in said recess bears so as to be held therein.

2. Device according to claim 1, **characterised in that** said two snap-fitting notches (118) are arranged substantially in alignment with the respective inner edges of the transverse peripheral borders (114, 115) of said frame (110).

3. Device according to either claim 1 or claim 2, **characterised in that** said illumination module (13) comprises a plurality of electroluminescent diodes which are mounted in a line on an elongate printed circuit board (131) which is fastened to an inner edge (116) of said upper longitudinal peripheral border (113), facing said recess (111), said complementary snap-fitting hooks (119) being suitable for transmitting an electrical connection to the connection terminals of said printed circuit board (131).

4. Device according to any of the preceding claims, **characterised in that** said complementary snap-fitting hooks (119) comprise a channel (121) which is formed in the base of the upside-down U and provided so as to be arranged in the axis of a female thread which is formed in the corresponding snap-fitting notches (118) and leads into said inner edge (116) facing a corresponding connection terminal of said printed circuit board (131).

5. Device according to claim 4, **characterised in that** said aligned channel (119) and said aligned female thread are suitable for receiving a connection pin for connection to a corresponding connection terminal of said printed circuit board (131) when said snap-fitting hooks (119) are mounted by snap-fitting on said snap-fitting notches (118).

6. Device according to any of claims 3 to 5, **characterised in that** said illumination module (13) comprises a light guide plate (132) having an upper edge which forms a lateral surface for coupling to said plurality of electroluminescent diodes from which the light is emitted laterally into said light guide plate, said light guide plate having a lower edge that is positioned along said V-shaped cross section (117) and is kept in planar contact with said sign (12) in said recess by means of said holding means (118, 119).

7. Device according to claim 6, **characterised in that** said lateral coupling surface of the light guide plate (132) engages with indexing contacts arranged on said inner edge (116) of said upper longitudinal peripheral border (113) for positioning said light guide plate in said recess.

8. Device according to any of the preceding claims, **characterised in that** said sign (12) is covered by a transparent cover (15) which is mounted and held in said recess (111) by means of said V-shaped cross section (117) and said holding means (118, 119) such that a front face of said cover is flush with a plane of the front of said frame.
